# EUROPEAN PATENT APPLICATION

(11) **EP 4 528 873 A1**
(43) Date of publication of application: **26.03.2025**
(21) Application number: 23835803.0
(22) Date of filing: 04.07.2023
(51) Int. Cl.: H01M 10/0562, H01M 10/052

(54) **COMPOSITE SOLID ELECTROLYTE AND ALL-SOLID-STATE BATTERY COMPRISING SAME**

(30) Priority: 04.07.2022 KR 20220082075
(71) Applicant: LG Chem, Ltd., Yeongdeungpo-gu Seoul 07336 (KR)
(72) Inventor: JEON, Do Yeon, Daejeon 34122 (KR); SON, Byoung Kuk, Daejeon 34122 (KR); LEE, Seong Ho, Daejeon 34122 (KR); PARK, Chang Hun, Daejeon 34122 (KR); MIN, Sang Hyuk, Daejeon 34122 (KR); KIM, In Gyu, Daejeon 34122 (KR); CHUNG, Ha Bin, Daejeon 34122 (KR); LEE, Dong Geon, Daejeon 34122 (KR)
(74) Representative: Hoffmann Eitle
(86) International application number: PCT/KR2023/009421
(87) International publication number: WO 2024/010337

(57) **Abstract**

The present invention relates to a composite solid electrolyte including sulfide-based solid electrolyte particles, and a polymer coating layer formed on the sulfide-based solid electrolyte particles, wherein the polymer coating layer includes a polymer having a Mooney viscosity (ML1+4, 100 °C) of 30 to 110, and an all-solid-state battery including the composite solid electrolyte.

## Description

### TECHNICAL FIELD

### Cross-reference to Related Applications

This application claims the benefit of Korean Patent Application No. 10-2022-0082075, filed on July 4, 2022, in the Korean Intellectual Property Office, the disclosure of which is incorporated herein in its entirety by reference.

### Technical Field

The present invention relates to a sulfide-based composite solid electrolyte having improved atmospheric stability and chemical resistance, and an all-solid-state battery including the same.

### BACKGROUND ART

All-solid-state batteries are batteries configured to replace a liquid electrolyte filled between a positive electrode and a negative electrode of typical lithium secondary batteries with a solid electrolyte, and are safe with no risk of explosion and have a higher energy density than the typical batteries, and are thus considered to be the preferred choice for next-generation batteries. The solid electrolyte used in the all-solid-state batteries is a solid material capable of conducting lithium ions in the batteries and has as high ionic conductivity as that of an electrolyte currently used in lithium secondary batteries. Core materials making up the solid electrolyte include polymers, sulfides, and oxides, but in particular, sulfide-based solid electrolytes having great ductility and high ionic conductivity are considered suitable for manufacturing large-sized, high-capacity batteries.

However, the sulfide-based solid electrolytes have limitations in that the electrolytes are highly reactive to moisture and thus react not only with moisture in the air but also with moisture at low humidity to generate hydrogen sulfide (H₂S), a harmful gas. Consequently, the toxic hydrogen sulfide adversely affects the safety of workers and deteriorates the performance of the sulfide-based solid electrolyte itself.

Accordingly, there remains a need to develop a sulfide-based solid electrolyte having excellent atmospheric stability and chemical resistance.

### DISCLOSURE OF THE INVENTION

### TECHNICAL PROBLEM

An aspect of the present invention provides a composite solid electrolyte having improved atmospheric stability and chemical resistance.

However, the objective of the present invention is not limited to the aforesaid, but other objectives not described herein will be clearly understood by those skilled in the art from the descriptions below.

### TECHNICAL SOLUTION

To resolve the tasks described above, the present invention provides a composite solid electrolyte and an all-solid-state battery.

According to an aspect of the present invention, there is provided a composite solid electrolyte including sulfide-based solid electrolyte particles and a polymer coating layer formed on the sulfide-based solid electrolyte particles, wherein the polymer coating layer includes a polymer having a Mooney viscosity (ML1+4, 100 °C) of 30 to 110.

The present invention provides the composite solid electrolyte according to (1) above, wherein the sulfide-based solid electrolyte has an argyrodite-type crystal structure.

The present invention provides the composite solid electrolyte according to (1) or (2) above, wherein the polymer of the polymer coating layer is at least one selected from the group consisting of a polymer of an acrylonitrile monomer and a butadiene monomer, a hydride thereof, and a polymer of a styrene monomer and a butadiene monomer.

The present invention provides the composite solid electrolyte according to any one of (1) to (3) above, wherein the polymer of the polymer coating layer includes a repeating unit represented by Formula 1 below and a repeating unit represented by Formula 2 below.

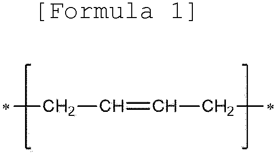

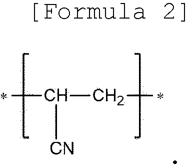

(5) The present invention provides the composite solid electrolyte according to any one of (1) to (4) above, wherein the polymer of the polymer coating layer includes a repeating unit derived from an acrylonitrile monomer in an amount of 15 wt% to 50 wt% with respect to a total weight of the polymer.

(6) The present invention provides the composite solid electrolyte according to any one of (1) to (5) above, wherein the polymer of the polymer coating layer includes a repeating unit derived from a butadiene monomer in an amount of 50 wt% to 85 wt% with respect to a total weight of the polymer.

(7) The present invention provides the composite solid electrolyte according to any one of (1) to (6) above, wherein the composite solid electrolyte includes the polymer coating layer in an amount of 0.1 parts by weight to 10 parts by weight with respect to 100 parts by weight of the sulfide-based solid electrolyte particles.

(8) The present invention provides the composite solid electrolyte according to any one of (1) to (7) above, wherein the composite solid electrolyte has an ionic conductivity of 0.001 mS/cm to 20 mS/cm.

(9) The present invention provides the composite solid electrolyte according to any one of (1) to (8) above, wherein when the composite solid electrolyte is exposed at a temperature of 25 °C and a relative humidity of 0.5% to 0.6%, hydrogen sulfide (H2S) is generated in an amount of 15 cm3 or less per gram of the composite solid electrolyte during the first hour.

(10) According to another aspect of the present invention, there is provided an all-solid-state battery including the composite solid electrolyte according to any one of (1) to (9) above.

### ADVANTAGEOUS EFFECTS

A composite solid electrolyte according to the present invention has a polymer coating layer having excellent atmospheric stability and chemical resistance formed on sulfide-based solid electrolyte particles, and may thus have excellent atmospheric stability in itself and have improved chemical resistance in a wet process for manufacturing batteries.

### MODE FOR CARRYING OUT THE INVENTION

Hereinafter, the present invention will be described in detail to aid in understanding of the present invention.

It will be understood that words or terms used herein shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

Herein, Mooney viscosity is a value measured using a Mooney viscometer, and specifically is measured by placing a sample on a rotor of a lower die provided in the Mooney viscometer, lowering an upper die at a constant piston pressure (about 70 psi), and then preheating the die at an internal temperature of 100 °C of the tester die for 1 minute, rotating the die clockwise for 4 minutes at a rate of 2 rpm, and measuring the torque applied to the rotor, and the Mooney viscosity herein is a torque value measured at 4 minutes after 1 minute-preheating (a total of 5 minutes including the preheating time). Herein, the measurement conditions for Mooney viscosity are indicated as (ML1+4, 100 °C), and M is an abbreviation for Mooney viscosity, L is an abbreviation for a large rotor, the number 1 indicates preheating time, +4 indicates rotation time of the rotor, and 100 °C indicates measurement temperature.

### Composite solid electrolyte

A composite solid electrolyte according to the present invention includes sulfide-based solid electrolyte particles and a polymer coating layer formed on the sulfide-based solid electrolyte particles, and the polymer coating layer includes a polymer having a Mooney viscosity (ML1+4, 100 °C) of 30 to 110.

The inventors of the present invention have found out that a composite solid electrolyte according to the present invention has a polymer coating layer having excellent atmospheric stability (good moisture-blocking and oxygen-blocking performances) formed on sulfide-based solid electrolyte particles, and may thus have excellent atmospheric stability in itself and have improved chemical resistance in dry and wet processes for manufacturing batteries, and thus have achieved the present invention.

In the composite solid electrolyte according to the present invention, the polymer coating layer contains a polymer having a Mooney viscosity (ML1+4, 100 °C) of 30 to 110, and accordingly, sulfide-based solid electrolyte particles may be prevented from being decomposed and deteriorating upon exposure to moisture or oxygen. Accordingly, the generation of hydrogen sulfide, a toxic gas, may be prevented, and the ionic conductivity of the composite solid electrolyte may be prevented from decreasing. The polymer may have a Mooney viscosity (ML1+4, 100 °C) of specifically 30 to 90, more specifically 30 to 80. Meanwhile, when the polymer has a Mooney viscosity of less than 30, heat resistance and chemical resistance are reduced to cause instability upon driving batteries, and when the polymer has a Mooney viscosity of greater than 110, the coating layer is thick and unevenly formed, resulting in low ionic conductivity and insufficient moisture-blocking effect.

According to the present invention, the sulfide-based solid electrolyte may have an argyrodite-type crystal structure in terms of high ionic conductivity and low reactivity with a lithium negative electrode. The sulfide-based solid electrolyte may be a sulfide-based solid electrolyte containing Li, P, and S. For example, the sulfide-based solid electrolyte may be Li₇₋ₓPS₆₋ₓAₓ (where A is Cl, Br, I, Sn, or a combination thereof, and x satisfies 0≤x≤2).

According to the present invention, the polymer of the polymer coating layer may be at least one selected from a polymer of an acrylonitrile monomer and a butadiene monomer, a hydride thereof, and a polymer of a styrene monomer and a butadiene monomer. That is, the polymer of the polymer coating layer may be at least one selected from an acrylonitrile-butadiene resin, which is a copolymer of acrylonitrile monomer and butadiene monomer, a hydrogenated acrylonitrile-butadiene resin, which is a hydride thereof, and a styrene-butadiene resin, which is a copolymer of styrene monomer and butadiene monomer. In this case, it is beneficial in that the composite solid electrolyte particles have improved dispersibility in an electrode slurry process because of the similarity to binder materials.

According to the present invention, the polymer of the polymer coating layer may include a repeating unit represented by Formula 1 below and a repeating unit represented by Formula 2 below in terms of improving the dispersibility of the composite solid electrolyte particles in the electrode slurry process.

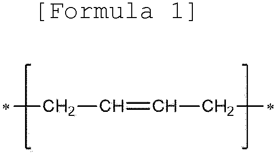

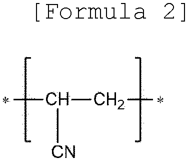

According to the present invention, the polymer of the polymer coating layer may contain a repeating unit derived from an acrylonitrile monomer in an amount of 15 wt% to 50 wt%, specifically 20 wt% to 40 wt%, with respect to the total weight of the polymer. In this case, it is beneficial in that the composite solid electrolyte particles have improved dispersibility and are easily soluble in a non-polar solvent used in preparing a coating solution.

According to the present invention, the polymer of the polymer coating layer may contain a repeating unit derived from a butadiene monomer in an amount of 50 wt% to 85 wt%, specifically 60 wt% to 80 wt%, with respect to the total weight of the polymer.

For example, when the polymer of the polymer coating layer is formed of the repeating unit represented by Formula 1 above and the repeating unit represented by Formula 2 above, with respect to the total weight of the polymer, the repeating unit represented by Formula 1 above may be included in an amount of 15 wt% to 50 wt%, and the repeating unit represented by Formula 2 above may be included in an amount of 50 wt% to 85 wt%.

According to the present invention, the polymer coating layer may be included in an amount of 0.1 parts by weight to 10 parts by weight, specifically 0.1 parts by weight to 7 parts by weight, and more specifically 0.5 parts by weight to 5 parts by weight, with respect to 100 parts by weight of the sulfide-based solid electrolyte particles. In this case, the moisture-blocking effect may be improved and the decrease in ionic conductivity may be minimized.

According to the present invention, the composite solid electrolyte may have an ionic conductivity of 0.001 mS/cm or greater, specifically, 0.001 mS/cm to 20 mS/cm, more specifically, 0.01 mS/cm to 10 mS/cm or 0.01 mS/cm to 5 mS/cm. The higher the ionic conductivity of the electrolyte, the better, but when a polymer coating layer is formed such that the ionic conductivity satisfies the above range as in the present invention, the moisture stability effect may be improved.

According to the present invention, when the composite solid electrolyte is exposed at a temperature of 25 °C and a relative humidity of 0.5% to 0.6%, hydrogen sulfide (H₂S) may be generated in an amount of 15 cm³ or less, or specifically 14cm³ or less, per gram of the composite solid electrolyte during the first hour. That is, the composite solid electrolyte according to the present invention has excellent moisture stability, and may thus have a low rate of decrease in ionic conductivity even after exposure to moisture, and have a low generation amount and rate of hydrogen sulfide, a toxic gas, thereby obtaining process safety. Meanwhile, the atmosphere when exposing the composite solid electrolyte to a temperature of 25 °C and a relative humidity of 0.5% to 0.6% may be an air atmosphere.

The composite solid electrolyte according to the present invention may be manufactured by coating sulfide-based solid electrolyte particles with a polymer composition containing a polymer having a Mooney viscosity (ML1+4, 100 °C) of 30 to 110.

The sulfide-based solid electrolyte particles may be synthesized, for example, through mechanical milling. Specifically, three types of precursors, Li₂S, P₂S₅, and LiCl, are weighed according to stoichiometry and then mixed through ball milling. The obtained mixed precursor is heat-treated for crystallization, and then pulverized through the ball milling again. The mixing, heat-treating, and pulverizing processes are performed in an inert gas atmosphere.

The polymer having a Mooney viscosity (ML1+4, 100 °C) of 30 to 110 may be produced by polymerizing the acrylonitrile monomer and butadiene monomer described above through methods such as suspension polymerization, solution polymerization, and bulk polymerization. For example, a polymer may be prepared by dispersing the acrylonitrile monomer and butadiene monomer described above, optionally a chain transfer agent, dispersant, heat initiator, and the like in a solvent and then suspension-polymerizing and mixing the materials with a stirrer.

Additionally, the polymer composition may be prepared by dissolving or dispersing a polymer having a Mooney viscosity (ML1+4, 100 °C) of 30 to 110 in a solvent such as toluene or xylene. In this case, the polymer having a Mooney viscosity (ML1+4, 100 °C) of 30 to 110 and the solvent such as toluene or xylene may be at a weight ratio of 1:20 to 2:1.

Lastly, the coating may be performed through a process of mixing and stirring the polymer composition and the sulfide-based solid electrolyte and then drying the resulting product, or spraying the polymer composition onto the sulfide-based solid electrolyte and then drying the resulting product. However, the present invention is not limited to thereto and may be performed through methods known in the art.

### All-Solid-state battery

The present invention provides an all-solid-state battery including the composite solid electrolyte described above.

To be specific, the all-solid-state battery includes a positive electrode containing a positive electrode active material, a negative electrode containing a negative electrode active material, and a solid electrolyte layer containing the composite solid electrolyte according to the present invention disposed between the positive electrode and the negative electrode.

The all-solid-state battery according to the present invention has a small decrease in ionic conductivity resulting from moisture, and may thus have excellent initial efficiency, lifespan characteristics, and output characteristics.

In this case, the all-solid-state battery of the present invention may be manufactured according to typical methods known in the art. For example, the all-solid-state battery of the present invention may be manufactured by performing stacking and pressing to place a solid electrolyte layer between the positive electrode and the negative electrode.

### (1) Positive electrode

The positive electrode may be prepared by coating a positive electrode current collector with a positive electrode slurry including a positive electrode active material, a binder, a conductive agent, a solvent, or the like.

The positive electrode current collector is not particularly limited so long as having conductivity without causing chemical changes in the battery, and, for example, may employ stainless steel, aluminum, nickel, titanium, fired carbon, or aluminum or stainless steel that is surface-treated with carbon, nickel, titanium, silver, or the like. Fine irregularities may be formed on a surface of the positive electrode current collector to improve the adhesion of the positive electrode active material, and the positive electrode current collector may have various forms such as a film, a sheet, a foil, a net, a porous body, a foam body, and a non-woven fabric body.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), lithium-nickel-manganese-cobalt-based oxide (e.g., Li (NiₚCo_{q}Mnᵣ₁)O₂ (where 0<p<1, 0<q<1, 0<r1<1, and p+q+r1=1) or Li (Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li (Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are each an atomic fraction of independent elements, wherein 0<p2<1, 0<q2<1, 0<r3<1, 0<S2<1, and p2+q2+r3+S2=1 are satisfied), and any one thereof or a compound of two or more thereof may be included.

Among the above-listed compounds, in terms of increasing the capacity characteristics and stability of a battery, the lithium composite metal oxide may include LiCoO₂, LiMnO₂, LiNiO₂, lithium nickel manganese cobalt oxide (e.g., Li (Ni_{1/3}Mn_{1/3}CO_{1/3})O₂, Li (Ni_{0.6}Mn_{0.2}CO_{0.2})O₂, Li (Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or lithium nickel cobalt aluminum oxide (e.g., Li (Ni_{0.8}Co_{0.15}Al_{0.05})O₂, etc.), and, in consideration of a significant improvement due to the control of type and content ratio of elements constituting the lithium composite metal oxide, the lithium composite metal oxide may include Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, and Li (Ni_{0.8}Mn_{0.1}Co_{0.1})O₂, and any one thereof or a mixture of two or more thereof may be used.

The positive electrode active material may be included in an amount of 60 wt% to 99 wt%, preferably 70 wt% to 99 wt%, and more preferably 80 wt% to 98 wt%, with respect to the total weight of the solid content of the positive electrode slurry excluding solvents.

The binder is a component that assists in binding between a conductive agent, an active material, and a current collector. Examples of such binder may include polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluorine rubber, and various copolymers thereof, or the like.

Typically, the binder may be included in an amount of 1 wt% to 20 wt%, preferably 1 wt% to 15 wt%, and more preferably 1 wt% to 10 wt%, with respect to the total weight of the solid content of the positive electrode slurry excluding solvents.

The conductive agent is a component for further improving conductivity of the positive electrode active material.

Any conductive agent, so long as having a conductivity without causing chemical changes in the battery, may be used without particular limitation, and may employ, for example, a conductive material, such as: graphite; carbon-based materials such as carbon black, acetylene black, Ketjen black, channel black, furnace black, lamp black, or thermal black; conductive fibers such as carbon fibers or metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives.

The conductive agent may be commonly included in an amount of 1 wt% to 20 wt%, preferably 1 wt% to 15 wt%, and more preferably 1 wt% to 10 wt%, with respect to the total weight of the solid content of the positive electrode slurry excluding solvents.

The solvent may include an organic solvent such as N-methyl-2-pyrrolidone (NMP), and may be used in an amount such that a desirable viscosity is obtained when the positive electrode active material, and optional binder and the conductive agent are included. For example, the solvent may be included such that the concentration of the solid content, which includes the positive electrode active material, and the optionally included binder and conductive agent, may be 50 wt% to 95 wt%, preferably 70 wt% to 95 wt%, and more preferably 70 wt% to 90 wt%.

### (2) Negative electrode

The negative electrode may be produced by coating a negative electrode current collector with a negative electrode slurry including a negative electrode active material, a binder, a conductive agent, and a solvent, or a graphite electrode made of carbon (C) or a metal itself may be used as a negative electrode.

For example, the negative electrode current collector is coated with the negative electrode slurry to manufacture a negative electrode, and the negative electrode current collector generally has a thickness of 3 to 500 µm. The negative electrode current collector is not particularly limited as long as it has a high conductivity without causing chemical changes in batteries, and for example, copper, stainless steel, aluminum, nickel, titanium, fired carbon, copper or stainless steel which is surface-treated with carbon, nickel, titanium, silver, or the like, an aluminum-cadmium alloy, or the like may be used. In addition, as in the positive electrode current collector, the negative electrode current collector may have fine irregularities on a surface thereof to improve bonding strength of a negative electrode active material, and the negative electrode current collector may be used in various forms such as a film, a sheet, a foil, a net, a porous body, a foam body, and a non-woven fabric body.

The negative electrode active material may be, for example, one kind or at least two kinds selected from the group consisting of natural graphite, artificial graphite, a carbonaceous material; a lithium-containing titanium composite oxide (LTO), metals (Me): Si, SiOₓ, Sn, Li, Zn, Mg, Cd, Ce, Ni, or Fe; an alloy formed of the metals (Me); an oxide (MeOₓ) formed of the metals (Me); and a composite of the metals (Me) and carbon. The negative electrode active material may be specifically a silicon-based negative electrode active material containing silicon (Si), silicon oxide (SiOₓ), or silicon alloy. In this case, a thin and stable SEI layer containing siloxane bonds is formed, and the battery may thus have further improved high-temperature stability and lifespan characteristics.

The negative electrode active material may be included in an amount of 60 wt% to 99 wt%, preferably 70 wt% to 99 wt%, and more preferably 80 wt% to 98 wt%, with respect to the total weight of the solid content of the negative electrode slurry excluding solvents.

The binder is a component that assists in binding between a conductive agent, an active material, and a current collector. Examples of the binder may include polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluorine rubber, and various copolymers thereof, or the like.

Typically, the binder may be included in an amount of 1 wt% to 20 wt%, preferably 1 wt% to 15 wt%, and more preferably 1 wt% to 10 wt%, with respect to the total weight of the solid content of the negative electrode slurry excluding solvents.

The conductive agent is a component for further improving conductivity of the negative electrode active material. Such conductive agent is not particularly limited as long as it has conductivity without causing chemical changes in the battery, and may employ, for example, a conductive agent, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like, may be used.

The conductive agent may be included in an amount of 1 wt% to 20 wt%, preferably 1 wt% to 15 wt%, and more preferably 1 wt% to 10 wt%, with respect to the total weight of the solid content of the negative electrode slurry excluding solvents.

The solvent may include water or an organic solvent such as NMP (N-methyl-2-pyrrolidone), and may be used in an amount satisfying a desirable viscosity when the negative electrode active material, and an optional binder and a conductive agent are included. For example, the solvent may be included such that the concentration of the solid content, which includes the negative electrode active material, and the optionally included binder and conductive agent, may be 50 wt% to 95 wt%, and preferably 70 wt% to 90 wt%.

When a metal itself is used as the negative electrode, the negative electrode may be formed from a metal thin film itself or prepared by physically bonding, rolling, or vapor depositing the metal on the negative electrode current collector. Electro deposition or chemical vapor deposition may be used as deposition technique.

For example, the metal thin film itself or a metal formed on the negative electrode current collector through binding/rolling/depositing may include one metal or an alloy of two metals selected from the group consisting of lithium (Li), nickel (Ni), tin (Sn), copper (Cu), and indium (In).

### (3) Solid electrolyte layer

The solid electrolyte layer may further include a binder in addition to the solid electrolyte according to the present invention.

The binder is a component that assists in binding between a conductive agent, an active material, and a current collector. Examples of such binder may include polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluorine rubber, and various copolymers thereof, or the like.

The binder may be commonly included in an amount of 1 wt% to 20 wt%, preferably 1 wt% to 15 wt%, and more preferably 1 wt% to 10 wt%, with respect to the total weight of the solid electrolyte layer.

The present invention provides a battery module including the all-solid-state battery as a unit cell, and a battery pack including the all-solid-state battery. The battery module and the battery pack include the secondary battery which has high capacity, high rate characteristics, and cycle characteristics, and thus, may be used as a power source of a medium- and-large sized device selected from the group consisting of an electric car, a hybrid electric vehicle, a plug-in hybrid electric vehicle, and a power storage system.

### MODE FOR CARRYING OUT THE INVENTION

Hereinafter, preferred examples are provided to aid in understanding of the present invention, but the examples are only for illustrating the present description, and it will be apparent to those skilled in the art that various modifications and alterations are possible within the scope and technical range of the present invention, and such modifications and alterations fall within the scope of claims included herein.

### Preparation Example

Three types of precursors, Li₂S, P₂S₅, and LiCl, were dry mixed (ball milled) at a molar ratio of 5:1:2. In the dry mixing, a planetary ball mill equipped with zirconia balls was used and rotated at a rate of over 300 rpm for uniform mixing. Thereafter, the obtained mixed precursor was heat-treated at 600 °C for 12 hours for crystallization, and then pulverized through the ball milling again to prepare Li₆PS₅Cl having an argyrodite-type crystal structure. All the processes above were performed in an inert Ar atmosphere.

### Examples and Comparative Examples

### Example 1

5 parts by weight of a polymer having a Mooney viscosity of 35 with respect to 100 parts by weight of xylene was dissolved to prepare a polymer composition. In this case, the polymer contains 33.0 wt% of repeating units derived from an acrylonitrile monomer with respect to the total weight of the polymer.

The polymer composition and Li₆PS₅Cl having an argyrodite-type crystal structure were mixed at a weight ratio of 1:1 and stirred for 1 hour using a stirrer, and then the solvent was removed through vacuum drying to form a polymer coating layer on Li₆PS₅Cl particles having an argyrodite-type crystal structure.

As a result, a composite solid electrolyte in which the polymer coating layer containing the polymer having with a Mooney viscosity of 35 was formed on the Li₆PS₅Cl particles having an argyrodite-type crystal structure was obtained. In this case, the polymer coating layer is present in an amount of 4.76 parts by weight with respect to 100 parts by weight of Li₆PS₅Cl.

### Example 2

A composite solid electrolyte in which a polymer coating layer containing a polymer having a Mooney viscosity of 46 was formed on the Li₆PS₅Cl particles having an argyrodite-type crystal structure was obtained in the same manner as in Example 1, except that a polymer having a Mooney viscosity of 46 and containing 33.5 wt% of repeating units derived from an acrylonitrile monomer with respect to the total weight of the polymer was used.

### Example 3

A composite solid electrolyte in which a polymer coating layer containing a polymer having a Mooney viscosity of 77.5 was formed on the Li₆PS₅Cl particles having an argyrodite-type crystal structure was obtained in the same manner as in Example 1, except that a polymer having a Mooney viscosity of 77.5 and containing 33.5 wt% of repeating units derived from an acrylonitrile monomer with respect to the total weight of the polymer was used.

### Comparative Example 1

Li₆PS₅Cl having an azirodite-type crystal structure prepared in Preparation Example was used as a solid electrolyte in Comparative Example 1.

### Comparative Example 2

A composite solid electrolyte in which a polymer coating layer containing a polymer having a Mooney viscosity of 27 was formed on the Li₆PS₅Cl particles having an argyrodite-type crystal structure was obtained in the same manner as in Example 1, except that a polymer having a Mooney viscosity of 27 and containing 33.5 wt% of repeating units derived from an acrylonitrile monomer with respect to the total weight of the polymer was used.

### Comparative Example 3

A composite solid electrolyte in which a polymer coating layer containing a polymer having a Mooney viscosity of 115 was formed on the Li₆PS₅Cl particles having an argyrodite-type crystal structure was obtained in the same manner as in Example 1, except that a polymer having a Mooney viscosity of 115 and containing 33.5 wt% of repeating units derived from an acrylonitrile monomer with respect to the total weight of the polymer was used.

**[Table 1]**

| | Mooney viscosity of polymer included in polymer coating layer |
|---|---|
| | (ML1+4, 100 °C) |
| Example 1 | 35 |
| Example 2 | 46 |
| Example 3 | 77.5 |
| Comparative Example 1 | - |
| Comparative Example 2 | 27 |
| Comparative Example 3 | 115 |

### Experimental Example 1: Evaluation of ionic conductivity

150 mg of each of the composite solid electrolyte of Examples 1 to 3, the solid electrolyte of Comparative Example 1, and the composite solid electrolyte powders of Comparative Examples 2 and 3 were each put into a SUS mold having a diameter of 13 mm. The mold was mounted on a press machine along with PEEK for insulation, and a potentiostat was connected to the SUS mold. After sufficiently densifying the electrolyte structure at a pressure of 370 MPa, the pressure was slowly reduced and maintained at 100 MPa, and AC impedance was measured at a measurement frequency of 1 Hz to 7 MHz. The ionic conductivity was calculated from the measured resistance values through Nyquist plot, and the results are shown in Table 2 below. All measurements were performed in a drying room at a temperature of 25 °C and a relative humidity of 0.59%.

### Experimental Example 2: Evaluation of hydrogen sulfide gas generation

5 mg of the composite solid electrolyte of Examples 1 to 3, the solid electrolyte of Comparative Example 1, and the composite solid electrolyte powders of Comparative Examples 2 and 3 were each placed in a glove box equipped with a hydrogen sulfide sensor (in a drying air atmosphere controlled to have a relative humidity of 0.59%) for 1 hour or greater. The amount of hydrogen sulfide generated per 1 g of the composite solid electrolyte was calculated from the amount of hydrogen sulfide generated for 1 hour immediately after the placement, and the results are shown in Table 2 below.

**[Table 2]**

| | Ionic conductivity (mS/cm) | Amount of hydrogen sulfide (H₂S) generated in first hour (cm³) |
|---|---|---|
| Example 1 | 1. 60 | 9.88 |
| Example 2 | 1.53 | 7.64 |
| Example 3 | 1.31 | 13.15 |
| Comparative Example 1 | 2.90 | 26.05 |
| Comparative Example 2 | 1.77 | 15.98 |
| Comparative Example 3 | 0.96 | 21.03 |

Referring to Table 2, it is seen that the composite solid electrolytes of Examples 1 to 3 generated less hydrogen sulfide gas than the solid electrolytes of Comparative Examples 1 to 3, indicating that the composite solid electrolytes of Examples 1 to 3 have excellent atmospheric stability and chemical resistance. The polymer used in the polymer coating layer of Examples 1 to 3 serves as a resistor, and accordingly, it is seen that the composite solid electrolytes of Examples 1 to 3 have lower ionic conductivity than Comparative Examples 1 and 2 but have significantly better moisture-blocking performance.

As a result, it is seen that in the composite solid electrolyte according to the present invention, the polymer coating layer contains a polymer having a Mooney viscosity (ML1+4, 100 °C) of 30 to 110, and accordingly, sulfide-based solid electrolyte particles may be prevented from being decomposed and deteriorated upon exposure to moisture or oxygen. Accordingly, it is seen that the generation of hydrogen sulfide, a toxic gas, may be prevented, and the ionic conductivity of the composite solid electrolyte may be prevented from decreasing.

## Claims

1. A composite solid electrolyte comprising:
sulfide-based solid electrolyte particles; and
a polymer coating layer formed on the sulfide-based solid electrolyte particles,
wherein the polymer coating layer comprises a polymer having a Mooney viscosity (ML1+4, 100 °C) of from 30 to 110.

2. The composite solid electrolyte of claim 1, wherein the sulfide-based solid electrolyte has an argyrodite-type crystal structure.

3. The composite solid electrolyte of claim 1, wherein the polymer of the polymer coating layer is at least one selected from the group consisting of a polymer of an acrylonitrile monomer and a butadiene monomer, a hydride thereof, and a polymer of a styrene monomer and a butadiene monomer.

4. The composite solid electrolyte of claim 1, wherein the polymer of the polymer coating layer comprises a repeating unit represented by Formula 1 below and a repeating unit represented by Formula 2 below:

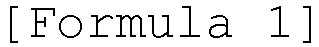

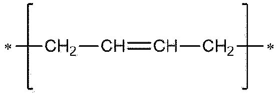

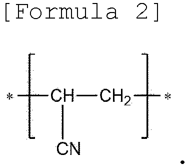

5. The composite solid electrolyte of claim 1, wherein the polymer of the polymer coating layer comprises a repeating unit derived from an acrylonitrile monomer in an amount of from 15 wt% to 50 wt% with respect to a total weight of the polymer.

6. The composite solid electrolyte of claim 1, wherein the polymer of the polymer coating layer comprises a repeating unit derived from a butadiene monomer in an amount of from 50 wt% to 85 wt% with respect to a total weight of the polymer.

7. The composite solid electrolyte of claim 1, wherein the polymer coating layer is included in an amount of from 0.1 parts by weight to 10 parts by weight with respect to 100 parts by weight of the sulfide-based solid electrolyte particles.

8. The composite solid electrolyte of claim 1, wherein the composite solid electrolyte has an ionic conductivity of from 0.001 mS/cm to 20 mS/cm.

9. The composite solid electrolyte of claim 1, wherein when the composite solid electrolyte is exposed at a temperature of 25 °C and a relative humidity of from 0.5% to 0.6%, hydrogen sulfide (H₂S) is generated in an amount of 15 cm³ or less per gram of the composite solid electrolyte during a first hour.

10. An all-solid-state battery comprising the composite solid electrolyte according to any one of claims 1 to 9.
